# EUROPÄISCHE PATENTANMELDUNG

(11) **EP 0 728 564 A2**
(43) Veröffentlichungstag der Anmeldung: **28.08.1996**
(21) Anmeldenummer: 96102133.4
(22) Anmeldetag: 14.02.1996
(51) Int. Cl.: B29B 17/00, B29C 45/54

(54) **Formstück aus verschiedenen Fraktionen thermoplastischer Kunststoffe sowie Verfahren und Vorrichtung zur Herstellung eines solchen Formstückes**

(30) Priorität: 24.02.1995 DE 19506448; 21.12.1995 DE 19547862
(71) Anmelder: Farahat, Aladin B., 46395 Bocholt (DE)
(72) Erfinder: Farahat, Aladin B., 46395 Bocholt (DE)
(74) Vertreter: Eichelbaum, Lambert, Dipl.-Ing.

(57) **Zusammenfassung**

Die Erfindung betrifft ein Formstück (23, 30, 33, 34, 101-103) aus verschiedenen Fraktionen thermoplastischer Kunststoffe aus einer Mischung von sortierten Kunststoffabfällen der Abfallindustrie des "Dualen Systems", welches in seinen Randbereichen (40, 121) ein dichteres Gefüge als in seinem Kernbereich (41, 122) aufweist, wobei die Mischung erhitzt, in eine Spritzgußform (21) gepreßt und gekühlt ist.

Der Erfindung liegt die Aufgabe zugrunde, ein Formstück dieser Art ebenso zu schaffen wie ein Verfahren und eine Vorrichtung zu dessen Herstellung, welches kostengünstig sowie vollständig aus Abfallprodukten des "Dualen Systems" zusammengesetzt ist.

Diese Aufgabe wird erfindungsgemäß dadurch gelöst, daß das Formstück (23, 30, 33, 34, 101, 102, 103) bis auf Reste (42, 124) von Aluminiumfolie vollständig aus von Metallen, Glas, steinernen Materialien und Leichtfremdstoffen befreiten Kunststoffkomponenten des "Dualen Systems" besteht, in welchem nichtplastifizierte Bestandteile (43, 125) von der plastifizierten Mischung nicht nur in einem feinporigen Querschnittsaußenbereich, sondern mit Restfeuchtbestandteilen auch in einem grobporigen Kernbereich (41, 121) des Querschnittes eingeschlossen sind.

## Beschreibung

Die Erfindung betrifft ein Formstück aus verschiedenen Fraktionen thermoplastischer Kunststoffe aus einer Mischung von sortierten Kunststoffabfällen der Abfallindustrie des "Dualen Systems", welches in seinen Randbereichen ein dichteres Gefüge als in seinem Kernbereich aufweist, wobei die Mischung erhitzt, in eine Spritzgußform gepreßt und gekühlt ist sowie ein Verfahren und eine Vorrichtung zur Durchführung des Verfahrens.

Ein bekanntes Formstück dieser Art gemäß der DE 43 22 784 A1 und der DE 43 38 199 A1 ist unter anderem dadurch gekennzeichnet, daß es aus einem mit einem Treibmittel aufgeschäumten, in einer Spritzgußform gepreßten sowie anschließend entlüfteten Formstein besteht, der nicht nur aus einer Mischung von sortierten Kunststoffabfällen des "Dualen Systems", sondern auch aus Füllstoffen von Kunststoff-Teppich-Resten und/oder Abfallreste von sanitären Produkten mit Zellstoff, wie Windelhöschen, besteht. Dieser Formstein ist mit dem Nachteil behaftet, daß die Kunststoff-Teppichreste und Zellstoffe von seinem Kern ausgehend teilweise bis in die Randbereiche reichende, zuweilen zentimetergroße Lunkerstellen bewirken, wodurch seine Festigkeit beeinträchtigt ist. Aufgrund seiner Ausgangsstoffe ist ein derartiges Formstück auf relativ dicke und großvolumige Formsteine beschränkt. Flache Gegenstände, wie Platten oder Gebrauchsgegenstände, können daraus nicht gefertigt werden.

Verfahrenstechnisch sagen beide Vorveröffentlichungen nichts darüber aus, wie die Kunststoffe des Haushaltabfalls ("Duales System") sortiert werden, zumal sich in den Abfällen des Dualen Systems Eisenmetalle, Nichteisenmetalle, Glas, steinerne Materialien und Aluminiumfolien befinden. Eine Restfeuchte von 5 % bis 10 % hat sich als undurchführbar erwiesen, weil die so gefertigten Formstücke bereits vor ihrer Entlüftung von dem Wasserdampf der Restfeuchte gesprengt werden oder unzumutbar große Lunkerbereiche bis in den Randbereich hinein bilden. Eine Mischung mit einem Maximum von 3 Gewichtsprozenten an Metallen hat sich als nicht haltbar erwiesen.

Ein Zusatz an Wasser zur Erhöhung der Restfeuchte der Mischung, wie sie in den Ansprüchen 27 ff der DE 43 38 199 A1 propagiert werden, beschleunigt ein Sprengen der Formstücke vor ihrer Entlüftungsmöglichkeit.

Vorrichtungsmäßig hat sich in der Praxis die Dosiereinrichtung der vorgenannten Vorveröffentlichungen wegen des damit verbundenen zeitlichen und personellen Aufwandes als unwirtschaftlich erwiesen. Der Mischer konnte keinen sinnvollen Einsatz finden, weil nur eine Verwendung der Abfälle des "Dualen Systems", so, wie sie angeliefert werden, wirtschaftlich und technisch vertretbar ist. Auch die trichterförmige Spritzgußmaschine mit der Erhitzungseinrichtung und der Preßschnecke konnten in der offenbarten Form keine Verwendung finden, weil die zerkleinerten Bestandteile infolge ihres geringen spezifischen Gewichtes nicht schüttfähig waren und den Eingang der Preßschnecke durch Verklebungen verschlossen und auch unter Druck durch Pressen und Stampfen nicht weiterbefördert werden konnten, was zu einem diskontinuierlichen Füllungsgrad der Preßschnecke führte.

Von diesem nächstkommenden Stand der Technik ausgehend, liegt der Erfindung die Aufgabe zugrunde, ein Formstück der eingangs genannten Gattung ebenso zu schaffen wie ein Verfahren und eine Vorrichtung zu dessen Herstellung, welches kostengünstig sowie vollständig aus Abfallprodukten des "Dualen Systems" zusammengesetzt ist und neben seiner obligatorischen thermischen und mechanischen sowie chemischen Belastbarkeit auch als dünnwandiger Gebrauchsgegenstand ohne Zusatzstoffe herstellbar ist.

Diese Aufgabe wird hinsichtlich des Produktes erfindungsgemäß in Verbindung mit dem eingangs genannten Gattungsbegriff dadurch gelöst, daß das Formstück bis auf Reste von Aluminiumfolie vollständig aus von Metallen, Glas, steinernen Materialien, Leichtfremdstoffen, wie Holz, Aluminiumfolie und Drähten, befreiten Kunststoffkomponenten des "Dualen Systems" besteht, in welchem nichtplastifizierte Bestandteile von der plastifizierten Mischung nicht nur in einem feinporigen Außenbereich, sondern mit den Restfeuchtebestandteilen auch in einem grobporigen Kernbereich eingeschlossen sind. Ein Formstück mit diesen Merkmalen kann als Blend- oder Isolierplatte oder als Balken, Sparren oder Stange für Bauzwecke oder in der Form eines Futtertroges, wie die eines Hundenapfes, oder als Skulptur oder Geschenkartikel ausgebildet sein. Damit eröffnet sich eine vielfältige Formgebung und Verwendung, wie sie mit Formstücken gemäß dem Stand der Technik nicht möglich sind.

Wie sich zwischenzeitlich herausgestellt hat, ergibt ein Überschuß an Polypropylenbestandteilen, wie sie in unterschiedlichen Chargen des "Dualen Systems" nicht nur gelegentlich vorkommen, eine äußerst glatte Oberfläche des Formstückes.

Vorteilhaft weist das Formstück in nichteingefärbtem Zustand eine graumarmorierte Oberfläche auf, wobei im Schnittbild die Reste von Aluminiumfolie sowie die nichtplastifizierten Bestandteile durch ihre farblichen Unterschiede zum unifarbenem grauen Untergrund identifizierbar sind. Lediglich im Kernbereich sind noch grobe Poren, jedoch keine nennenswerten Lunker mehr erkennbar.

Nach einer vorteilhaften Weiterbildung der Erfindung ist das Formstück zu einem dünnwandigen, mit Ausnehmungen und/oder Einschnitten und/oder Kerben versehenen Gebrauchsgegenstand in Form eines Stahlmattenhalters, einer Kammleiste oder eines Kerbbalkens ausgebildet, deren Wandseiten mit einer zur Horizontalen schräg verlaufenden Form versehen sind. Diese geneigte Form hat überraschenderweise dazu geführt, daß in den dünnwandigeren Bereichen über den gesamten Querschnitt ein erheblich dichteres Gefüge als in deren dickwandigeren Bereichen vorhanden ist. Dadurch wird trotz der Einschnitte und/oder Kerben und/oder Ausnehmungen eine gleichmäßige Festigkeit und ebenso überraschend auch eine gleichmäßig glatte Oberfläche ohne Einfallerscheinungen, Ausplatzungen oder Lunkern erzielt. Dieses Ergebnis läßt sich nur dadurch erklären, daß der Austritt der Restfeuchte, die bereits nach der Hauptanmeldung als Treibgas beim Spritzgußvorgang verwendet wird, in nicht nachvollziehbarer Weise relativ gleichmäßig ausdünstet und/oder diffusorartig in die dickwandigeren Bereiche gepreßt wird.

Nach einer Ausführungsform besteht das Formstück als Stahlmattenhalter aus einer im Querschnitt U-förmigen Schiene, in deren Seitenschenkel kreisabschnittsförmige Ausnehmungen und in deren Steg rechteckförmige Ausnehmungen mit abgerundeten Eckenbereichen vorgesehen sind. Die Innen- und Außenwand der Seitenschenkel sowie die Begrenzungswände der Ausnehmungen weisen eine Neigung auf, die mit einer Horizontalen einen spitzen Winkel bildet. Durch diese Ausbildung wird ein Stahlmattenhalter geschaffen, der sämtlichen Festigkeitsanforderungen genügt. Es sei an dieser Stelle erwähnt, daß es bereits Stahlmattenhalter aus Kunststoff gibt, die jedoch sämtlich im Strangpreßverfahren hergestellt werden und deren Ausnehmungen in einem nachfolgenden, kostenträchtigen Verfahren ausgestanzt werden müssen. Der erfindungsgemäße Stahlmattenhalter hingegen wird sehr preiswert in einem Arbeitsgang in einer Spritzgußform geformt und ist nach seinem Abkühlungsvorgang unmittelbar gebrauchsfähig. Die Festigkeit dieses Stahlmattenhalters beeinträchtigende Lunker, Abplatzungen oder Einfallerscheinungen waren überraschenderweise auch in seinen sehr dünnwandigen Bereichen nicht festzustellen.

Nach einer weiteren Ausführungsform ist das Formstück als Kammleiste für einen Transport auf einer Palette ausgebildet und mit einem bis etwa zu einer ersten Hälfte ihrer Höhe durchgehenden, massiven Leistenbereich und zu etwa einer zweiten Hälfte ihrer Höhe mit einem zinkenartigen Leistenbereich versehen, wobei sämtliche in der Seitenansicht erkennbaren Wandseiten eine geneigte Form aufweisen, die mit einer Horizontalen einen spitzen Winkel bilden. Diese Kammleiste, die bisher aus Holz gefertigt und aufgrund von eindringendem Wasser, Ölen oder sonstigen flüssigen Substanzen mit nur einer relativ geringen Lebensdauer behaftet war, wird nunmehr aufgrund ihrer Ausgangsprodukte aus Abfallstoffen des "Dualen Systems" nicht nur sehr preiswert hergestellt, sondern ist auch resistent gegenüber sämtlichen flüssigen Substanzen. Diese Kammleisten werden mit ihren Zinken ineinandergesteckt, um auf einer Palette bestimmte räumliche Abgrenzungen zum verwackelungsfreien bzw. verschiebungsarmen Transport von Einzelgegenständen auf Paletten zu gewährleisten. Dabei versteht es sich, daß diese Kammleiste je nach der Höhe der auf der Palette räumlich abzugrenzenden Produkte mit völlig unterschiedlichen Höhen ihres massiven Leistenbereiches einerseits und ihres zinkenartigen Leistenbereiches andererseits versehen werden können. Beim Ineinanderstecken der Kammleisten kann eine lose Steckverbindung oder aber auch aufgrund der Neigung der Wandseiten eine leichte Klemmverbindung in den dadurch vorhandenen breiteren Bereichen der Wandseiten erzielt werden, die sich dennoch leicht lösen läßt.

Dabei versteht es sich, daß die Neigung der einzelnen Wände der Kammleiste auch durchaus einen anderen Verlauf als die in den noch zu beschreibenden Zeichnungen haben kann.

Nach einer zusätzlichen Ausführungsform besteht das Formstück aus einem Kerbbalken, der mit in regelmäßigen Abständen an seiner oberen und unteren Längsseite mit Kerben zur Aufnahme von stangenförmigen Produkten versehen ist, wobei sämtliche in der Seitenansicht sichtbaren Wandseiten eine geneigte Form aufweisen, die mit einer Horizontalen einen spitzen Winkel bildet.

Das erfindungsgemäße Verfahren zur Herstellung derartiger Formstücke ist durch folgende Verfahrensschritte gekennzeichnet:
a) Eine Mischfraktion des "Dualen Systems" wird auf eine Korngröße von 50 mm bis 60 mm zerkleinert,
b) das zerkleinerte Material wird von den Metallbestandteilen befreit,
c) hiernach werden steinerne Materialien und Glas durch Sieben aus der Mischfraktion entfernt,
d) in einem Windsichter wird die Mischfraktion von Leichtfremdstoffen, wie Holz, Aluminiumfolie und dünnen Drähten, weitgehend befreit,
e) in einem Trockner wird das Restmaterial auf eine Feuchtigkeit von weniger als 5 %, bezogen auf die Trockensubstanz, getrocknet,
f) sodann wird die Mischfraktion auf eine Temperatur von etwa 120 °C erhitzt und in eine gut schüttfähige Kornform überführt,
g) die Kornform wird sodann auf 150 °C bis 180 °C erhitzt und nach Beendigung des Spritzgußvorganges die Spritzgußform mit dem darin befindlichen Formstück mit Wasser gekühlt.

Bei diesem Verfahren hat sich eine Korngröße von 50 mm bis 60 mm gemäß dem Merkmal a) als äußerst gut in einem Produktionsfluß handhabbar erwiesen. Die Entfernung der metallischen Bestandteile, wie steinerne Materialien und Glas, sowie die Entfernung der Leichtfremdstoffe, wie Holz, Aluminiumfolie und Drähten, führt zu einer relativ homogenen Mischung von Kunststofffraktionen völlig unterschiedlicher Art und Zusammensetzung. Die Bezeichnung "homogen" ist dabei auf Kunststoffe aller Art bezogen, die keine "Nicht-Kunststoff-Bestandteile" enthalten.

Durch die Reduzierung der Restfeuchte auf weniger als 5 %, bezogen auf die Trockensubstanz, wird gemäß dem Merkmal e) ein Aufsprengen der Formstücke unter dem Druck des in ihnen enthaltenden Wasserdampfes nach dem Spritzgußvorgang weitgehend unterbunden.

Durch die Überführung der Mischfraktion in eine gut schüttfähige Kornform gemäß dem Merkmal f) wird ein Transportstau in der Nähe der Spritzgußform verhindert und ein ausgezeichneter Füllungsgrad der Förderschnecke gewährleistet.

In Weiterbildung des erfindungsgemäßen Verfahrens wird die Mischfraktion auf ihre Korngröße geschreddert, was wesentlich schneller als ein Mahlvorgang nach dem Stand der Technik erfolgen kann.

Zur Erzielung einer ausgezeichneten schüttfähigen Kornform wird die Mischfraktion nach ihrer Erhitzung auf 120 °C entweder in Pellets oder in Briketts gepreßt oder in stangenförmige Formkörper überführt und hiernach auf eine bestimmte Korngröße gebrochen, geschnitten oder geformt. Sobald die Mischfraktion in Pellets umgeformt wird, haben sich solche mit einem Durchmesser von 4 mm bis 10 mm und einer Länge von 20 mm bis 50 mm als besonders vorteilhaft erwiesen.

Nach einer vorteilhaften Weiterbildung der Erfindung werden die Formstücke nach dem Spritzgußvorgang mindestens fünf Minuten in der mit Wasser gekühlten Spritzgußform belassen, wobei der Kühlprozeß nach ihrem Ausstoß aus der Spritzgußform an der Luft fortgesetzt werden kann, solange die Formstücke noch unverpackt auf Paletten oder in Behältern abgelagert werden.

Wie bereits erwähnt, haben sich die Vorrichtungen nach dem vorbeschriebenen, nächstkommenden Stand der Technik sowohl als zu zeit- und arbeitsintensiv als auch mit zahlreichen Störungen behaftet herausgestellt. Eine erfindungsgemäße Vorrichtung zur Durchführung des vorbeschriebenen Verfahrens schließt diese Nachteile dadurch aus, daß dem Trockner in Durchlaufrichtung der Mischfraktion des "Dualen Systems" nacheinander ein Schredder, ein Magnetabscheider zur Befreiung der Eisenbestandteile, ein weiterer Abscheider zum Trennen von Nichteisenmetallen, eine Siebvorrichtung zum Entfernen der steinernen und gläsernen Materialien sowie ein Windsichter zur Entfernung der Leichtfremdstoffe vorgeordnet sind. Mit einer derartigen Vorrichtung können Mischfraktionen des "Dualen Systems", so, wie sie von den Abfallbeseitigungsunternehmen angeliefert werden, direkt ohne Vorsortierung und ohne Dosierung mit der erfindungsgemäßen Vorrichtung verarbeitet werden.

In Weiterbildung der Erfindung ist zur Sicherstellung eines störungsfreien Betriebes vor der Spritzgußform eine Förderschnecke mit sie umgebender Erhitzungseinrichtung angeordnet, an deren Eintritt ein Trichter zur Aufnahme des schüttfähigen Materials der Mischfraktion angebracht ist. Dieses schüttfähige Material fällt entweder aufgrund seines relativ hohen spezifischen Gewichtes unter seiner Schwerkraft in den Eingangsbereich der Förderschnecke oder wird von einem zwischen dem Trichter und der Förderschnecke angeordneten Saugförderer mit zusätzlicher Saugkraft dorthin befördert.

Ein Spritzkolben saugt beim Zurückfahren von dem Austrittsende der Förderschnecke das bis auf ca. 150 °C bis 180 °C erhitzte, plastifizierte Material der Mischfraktion an und preßt es nach dem Verschließen des Austrittsendes der Förderschnecke mit dem erforderlichen Druck in die Spritzgußform. Durch das Ansaugen des Spritzkolbens wird der Vorschub des plastifizierten Materials seitens der Förderschnecke unterstützt und für einen entsprechend hohen Füllungsgrad sowohl der Förderschnecke als auch des Spritzgießzylinders, der der Spritzgußform vorgeordnet ist, gesorgt.

Die Spritzgußvorrichtung besteht in an sich bekannter Weise aus mehreren nach Art eines Karussells angeordneten Spritzguß-Rundläuferstationen, deren Anzahl und deren Zeittakt derart ausgerichtet sind, daß vor der erneuten Füllung einer Spritzgußform für das bis zu diesem Zeitpunkt darin eingeschlossene Formstück eine Kühlzeit mit Wasser von mindestens fünf Minuten sichergestellt ist. Diese Kühlzeit hat sich als zur Vermeidung von Einfallerscheinungen der Formstücke als günstig herausgestellt. Es ist jedoch auch möglich, die Spritzgußvorrichtung linear nebeneinander anzuordnen und den Spritzkolben mit Spritzzylinder und Förderschnecke und Erhitzungseinrichtung linear vor die einzelnen Spritzgußformen zu verfahren.

Unterhalb des Ausganges der Spritzgußform befindet sich eine Rutsche und am Ende der Rutsche ein Transportband und am Ende des Transportbandes eine Palette oder ein Behälter zur Aufnahme und weiteren Luftkühlung der Formstücke.

Zwischen den einzelnen Einrichtungen sind jeweils Transportbänder in Form von Gurtband- oder Kettenförderern vorgesehen.

Eine erfindungsgemäße Vorrichtung zur Durchführung des Verfahrens zur Herstellung der Formstücke sowie unterschiedlich gestaltete Formstücke sind in den Zeichnungen dargestellt. Dabei zeigen:
Figuren 1 und 2 eine erfindungsgemäße Vorrichtung zur Herstellung der Formstücke nach dem erfindungsgemäßen Verfahren in einem kontinuierlichen Durchflußdiagramm,
Figuren 3 bis 5 die Ansicht, Seitenansicht und Draufsicht auf ein als Blend- oder Isolierplatte ausgebildetes Formstück,
Fig. 6 das Formstück der Figuren 3 bis 5 als Blendplatte in einem Eckenbereich eines Gebäudes,
Figuren 7 und 8 die Draufsicht und Seitenansicht eines als Hundefreßnapf ausgebildeten Formstückes,
Figuren 9 bis 11 die Draufsicht, Seitenansicht und Stirnansicht eines als Verbundstein ausgebildeten Formstückes,
Fig. 12 eine Schnittansicht entlang der Linie XII-XII von Fig. 9 mit der Innenstruktur dieses Formstückes,
Fig. 13 die Seitenansicht eines Stahlmattenhalters mit den Enden einer aufgelegten Stahlmatte in Richtung des Pfeiles XIII von Fig. 14,
Fig. 14 die Draufsicht in Richtung des Pfeiles XIV von Fig. 13,
Fig. 15 die Draufsicht auf einen Teilbereich eines Stahlmattenhalters etwa im Maßstab 2 : 1 zur tatsächlichen Größe,
Fig. 16 einen Schnitt entlang der Linie XVI-XVI von Fig. 15,
Fig. 17 die Seitenansicht in Richtung des Pfeiles XVII von Fig. 15,
Fig. 18 ein weiteres Ausführungsbeispiel der Erfindung in Form einer Kammleiste für einen Palettentransport,
Fig. 19 eine Schnittansicht entlang der Linie XIX-XIX von Fig. 18,
Fig. 20 die Draufsicht auf eine Palette, deren Fläche durch mehrere ineinandergesteckte Kammleisten der Figuren 18 und 19 in unterschiedlich große Transportbereiche mit darin eingesetzten Transportgütern unterteilt ist,
Fig. 21 eine Schnittansicht entlang der Linie XXI-XXI von Fig. 20,
Fig. 22 eine dritte Ausführungsform der Erfindung in Form zweier Kerbbalken zur stabilen Lagerung von stangenförmigem Material,
Fig. 23 eine Schnittansicht entlang der Linie XXIII-XXIII von Fig. 22 und
Fig. 24 eine Draufsicht in Richtung des Pfeiles XXIV von Fig. 22.

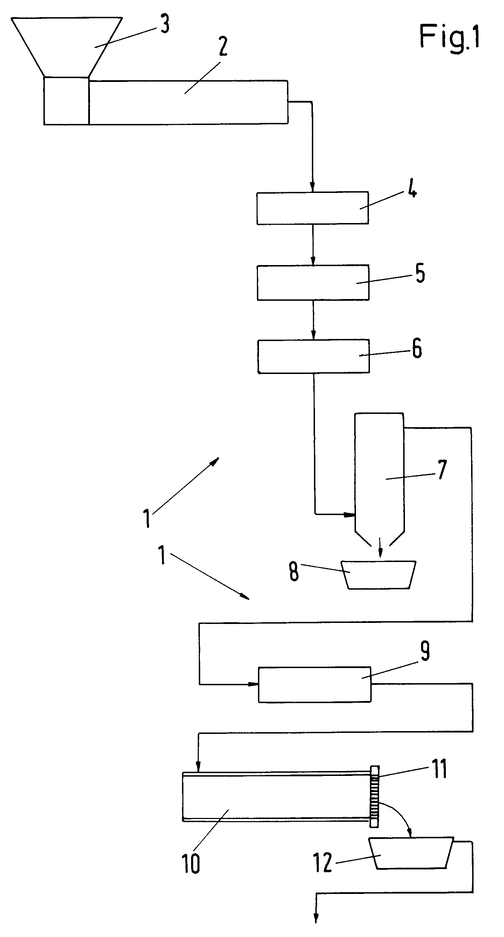

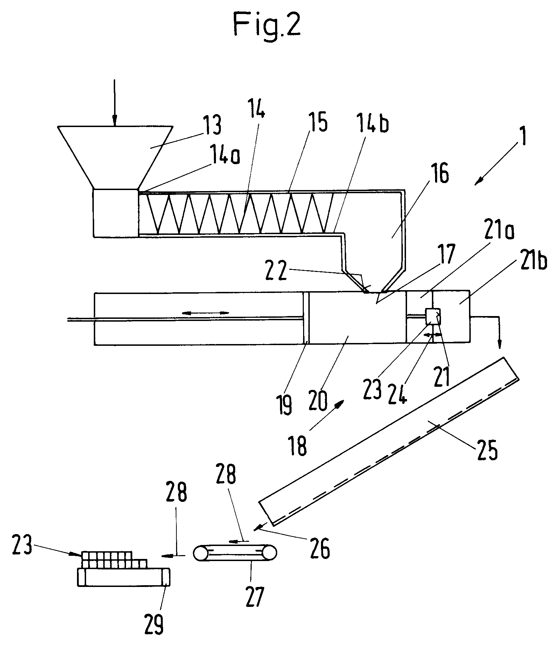

Gemäß den Figuren 1 und 2 arbeitet das erfindungsgemäße Verfahren mit der erfindungsgemäßen Vorrichtung wie folgt:

Die Vorrichtung 1 weist an ihrem Eingang einen Schredder 2 auf, in dessen Trichter 3 die unsortierten Abfälle des "Dualen Systems", so, wie sie vom Entsorgungsunternehmen angeliefert werden, hineingeschüttet werden. Im Schredder 2 werden sämtliche Abfälle auf eine Korngröße von 50 mm bis 60 mm zerkleinert. Im nachfolgenden Magnetabscheider 4 wird das geschredderte Material von den Eisenbestandteilen und im nachgeordneten NE-Abscheider 5 von den Nichteisenmetallen befreit. Hiernach gelangt die von den Metallbestandteilen befreite Mischfraktion auf ein Sieb 6, auf welchem die steinernen Materialien und Glasbestandteile abgesiebt werden.

Sodann wird die Mischfraktion in einen Windsichter 7 geleitet, in welchem es von Leichtfremdstoffen, wie Holz, Aluminiumfolie und dünnen Drähten, weitgehend befreit wird. Die Leichtfremdstoffe werden in einem Behälter 8 gesammelt und sodann einer anderen Verwendung zugeführt. Im Trockner 9 wird das Restmaterial der Mischfraktion auf eine Feuchtigkeit von weniger als 5 %, bezogen auf ihre Trockensubstanz, getrocknet. Vom Trockner 9 wird die nur noch aus Kunststoffen bestehende Mischfraktion in eine Pelletiereinrichtung 10 gefördert, dort auf etwa 120 °C erhitzt, durch eine Lochscheibe 11 zu Pellets mit einem Durchmesser von 4 mm bis 10 mm und einer Länge von etwa 20 mm bis 50 mm gepreßt. Es ist auch möglich, anstelle der Pelletiereinrichtung eine Brikettiereinrichtung oder eine Strangpreßmaschine mit anschließender Trenneinrichtung zu setzen, da der Sinn der Pelletiereinrichtung und ihrer vorgenannten äquivalenten Einrichtungen darin beruht, die Mischfraktion in eine gut schüttfähige Korngröße mit entsprechend höherem spezifischen Gewicht zu überführen. Die auf diese Weise erhaltenen Pellets, Briketts oder sonstige Formstücke mit entsprechender Korngröße und entsprechendem spezifischen Gewicht werden in einem Behälter 12 aufgefangen und aus diesem in den Trichter 13 gefördert, der sich am Eingang 14a einer Förderschnecke 14 befindet, die von einer Erhitzungseinrichtung 15 umgeben ist.

Zur weiteren Erhöhung des Füllungsgrades der Förderschnecke 14 kann auch zwischen dem Trichter 13 und dem Eingang 14a der Förderschnecke 14 ein Saugförderer angeordnet werden.

Um am Eingang 14a zur Förderschnecke 14 einen entsprechend guten und damit wirtschaftlichen Füllungsgrad der Förderschnecke 14 bei störungsfreiem Betrieb zu erhalten, müssen die Pellets, Briketts oder sonstigen Formstücke der verbliebenen Mischfraktion unter ihrem Eigengewicht im Trichter 13 zum Eingang 14a der Förderschnecke 14 gelangen. Am Ende 14b der Förderschnecke 14 hat sich die Mischfraktion aufgrund der Erhitzungseinrichtung 15 in eine plastische und gut spritzfähige Masse unter einer Temperatureinwirkung von 150 °C bis 180 °C umgesetzt. Am Ende 14b der Förderschnecke 14 gelangt die plastifizierte Mischfraktion aus der Austrittskammer 16 bei geöffnetem Schieber 17 in eine Spritzgußeinrichtung 18. Beim Zurückfahren des Spritzkolbens 19 zur linken Bildrandseite gelangt die plastifizierte Mischfraktion unter dem Druck der Förderschnecke sowie unter der Saugwirkung des Spritzkolbens 19 in die Kammer 20, aus welcher sie nach dem Schließen des Schiebers 17 beim Einfahren des Spritzgußkolbens 19 zur rechten Bildrandseite in die Spritzgußform 21 gepreßt wird.

Von der Spritzgußeinrichtung 18 sind mehrere karussellartig als Rundläufer um eine Rotationsachse herum angeordnet, von welcher eine jede mit einem eigenen Spritzkolben 19, einer Kammer 20 und einer Spritzgußform 21 versehen ist. Die Wahl der Anzahl und des Zeittaktes, in welchem eine jede Spritzgußeinrichtung 18 mit ihrer Öffnung 22 unter den Schieber 17 der Erhitzungseinrichtung 15 mit der Förderschnecke 14 gelangt, kann die Kühlzeit des bis zum nächsten Spritzgußvorgang in der Spritzgußform 21 verbleibenden Formstückes 23 gesteuert werden. Denn für das in der Spritzgußform 21 befindliche Formstück 23 ist eine Mindestkühlzeit von fünf Minuten mittels Wasser erforderlich, welches eine jede Spritzgußform 21 kühlt. Erst kurz vor der erneuten Füllung der Spritzgußform 21 fährt diese mit ihren beiden Hälften 21a, 21b in Richtung des Doppelpfeiles 24 auseinander, so daß das auf diese Weise freigegebene oder mittels einer nicht dargestellten, zusätzlichen Ausstoßervorrichtung ausgestoßene Formstück 23 unter seiner Schwerkraft auf die Rutsche 25 fällt.

Von der Rutsche 25 gelangen die Formstücke 23 in Richtung des Pfeiles 26 auf ein Transportband 27, von welchem sie in Richtung des Pfeiles 28 auf eine Palette 29 zur weiteren Luftkühlung gelangen. Die Palette 29 kann auch durch einen Behälter ersetzt werden.

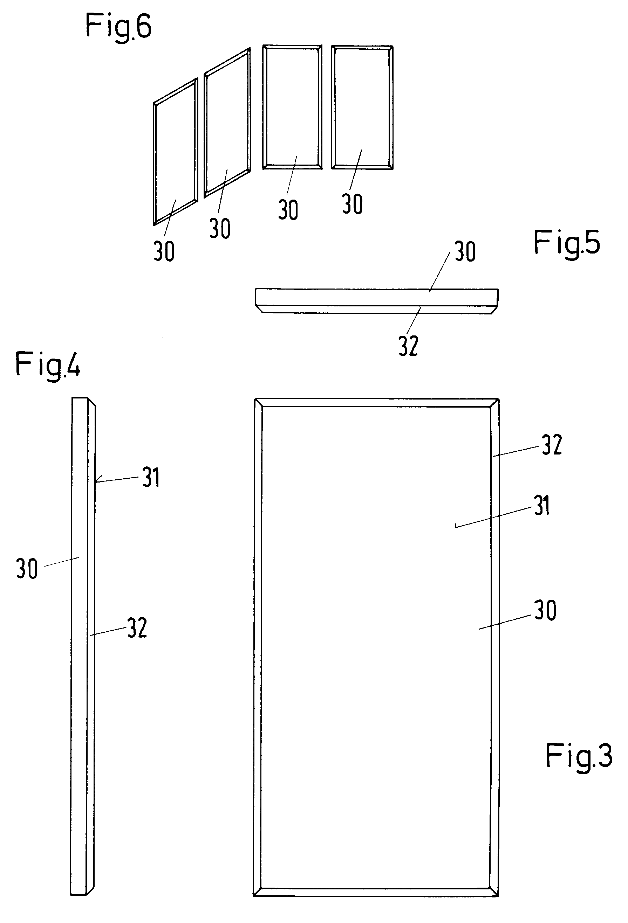

Nach dem vorbeschriebenen Verfahren sowie mit der vorbeschriebenen Vorrichtung 1 können im Gegensatz zum Stand der Technik auch flache sowie dünnwandige Formstücke 23 hergestellt werden, wie sie beispielsweise in den Figuren 3 bis 6 in Form einer dünnen Blend- oder Isolierplatte 30 dargestellt sind. Die Blend- oder Isolierplatte 30 ist an ihrer Sichtseite 31 mit einer umlaufenden Randfase 32 versehen, die ihre Optik insbesondere dann verbessert, wenn sie gemäß Fig. 6 an sichtbaren Außenseiten eines Gebäudes angeordnet wird. Die auf diese Weise erhaltenen Formstücke 30 können gesägt, gebohrt und auch mit anderen bekannten spanabhebenden Verfahren bearbeitet werden. Auch Trennschweißungen und vorübergehende Änderungen ihrer Modifikationsphase durch Erhitzung, z.B. zum Einpressen von Figuren oder Ornamenten, sind ohne weiteres möglich.

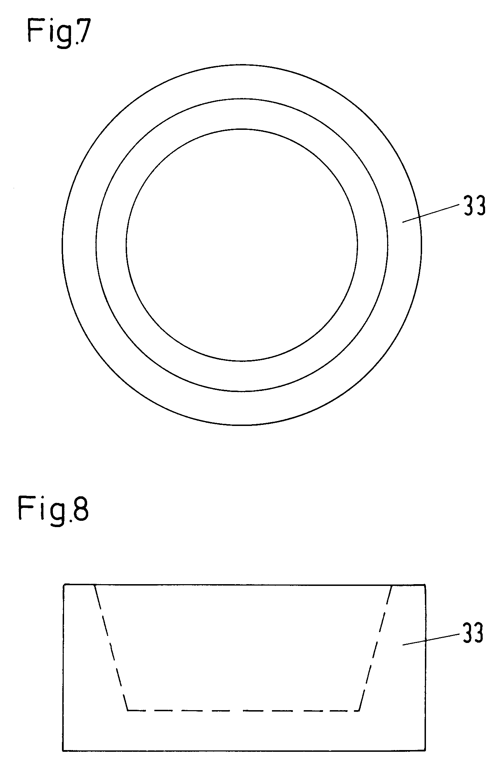

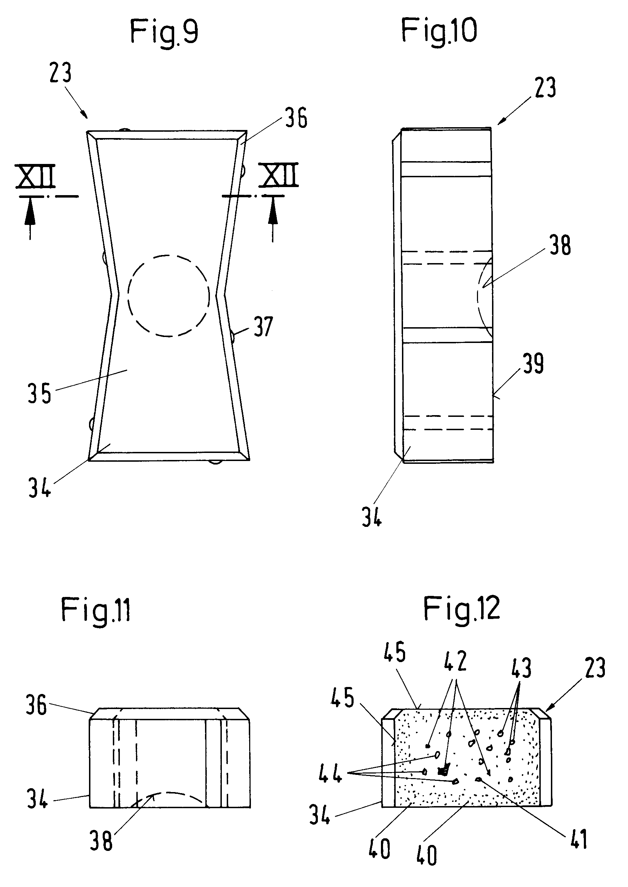

In den Figuren 7 und 8 ist ein weiteres Formstück 33 in Form eines Hundefreßnapfes dargestellt. Anstelle dieses Hundefreßnapfes ist auch die Herstellung anderer Tierfuttertröge, Vogeltränken oder Skulpturen für den Außenbereich nach dem erfindungsgemäßen Verfahren und mit der entsprechenden Vorrichtung möglich. Anschließend können die Formstücke 23 zur Verbesserung ihrer Optik mit glänzenden Chrom-, Gold- oder Bronzeüberzügen versehen werden.

In den Figuren 9 bis 12 ist ein weiteres Formstück 34 in Form eines Verbundsteines dargestellt, der gleichfalls an seiner Sicht- und Trittseite 35 mit einer umlaufenden Randfase 36 sowie zur Abstandshalterung mit senkrecht zur Trittfläche 35 verlaufenden Abstandshalterleisten 37 versehen ist. Die kalottenförmige Vertiefung 38 an der Unterseite 39 des Formsteines 34 geht auf den Spritzgußvorgang zurück, hat ansonsten jedoch bezüglich des Formstückes 34 keine technische Bedeutung.

Die Güte der neuen Formstücke 23, 30, 33, 34 ist am anschaulichsten aus Fig. 12 ersichtlich. Im Außenrandbereich 40 ist ein völlig dichtes Gefüge erkennbar, welches das Formstück 23 gegen jedwede Auslaugungsgefahr schützt. Dies liegt daran, daß im Spritzgußvorgang diejenigen Kunststoffanteile mit der geringsten Zähigkeit und damit mit dem besten Fließvermögen an die Außenwandung der Spritzgußform 21 gepreßt werden. Von diesem Randbereich 40 mit dem dichten Gefüge nimmt zum Kernbereich 41 die Größe der Poren diskontinuierlich zu. Reste 42 von Aluminiumfolie finden sich als glänzende Partikel über den gesamten Querschnitt des Formstückes 23 verteilt. Kunststofffraktionen 43 mit einer höheren Plastifizierungstemperatur als 150 °C bis 180 °C sind gleichfalls im gesamten Querschnitt als eingeschlossene andersfarbige Partikel 43 erkennbar. Die Farbe dieser Partikel läßt Rückschlüsse auf die Art des Kunststoffes zu.

Und schließlich finden sich im Kernbereich 41 unterschiedlich große Poren 44, die durch den Dampfdruck der verbliebenen Restfeuchte von unter 5 %, bezogen auf die Trockensubstanz, der gesamten Mischfraktion zustande kommen. Diese in ihrer Größe vernachlässigbaren Poren beeinträchtigen nicht die mechanische Belastbarkeit des Formstückes 23.

Außerdem läßt die geringe Restfeuchte von weniger als 5 %, bezogen auf die Trockensubstanz, die beim Stand der Technik noch erforderliche Entlüftung mittels einer Anstechvorrichtung nach dem Spritzgußvorgang entbehrlich werden.

Das Schnittbild gemäß Fig. 12 offenbart als vorherrschende Farbe Grau. Jedoch können die Formstücke 23 durch Farbzusätze entweder am Trichter 13 oder zwischen Trockner 9 und Pelletiereinrichtung 10 beliebig eingefärbt werden.

In nichteingefärbtem Zustand der Mischfraktion weisen die Außenflächen 45 einen marmorierten Grauton auf.

Neben dem unvergleichlichen Vorteil, daß die mit dem erfindungsgemäßen Verfahren und der erfindungsgemäßen Vorrichtung gepreßten Formstücke praktisch mit jeder beliebigen, auch flachen und dünnwandigen Form versehen werden können, weisen sowohl das Verfahren als auch die Vorrichtung gegenüber dem Stand der Technik eine störungsfreie Kontinuität auf.

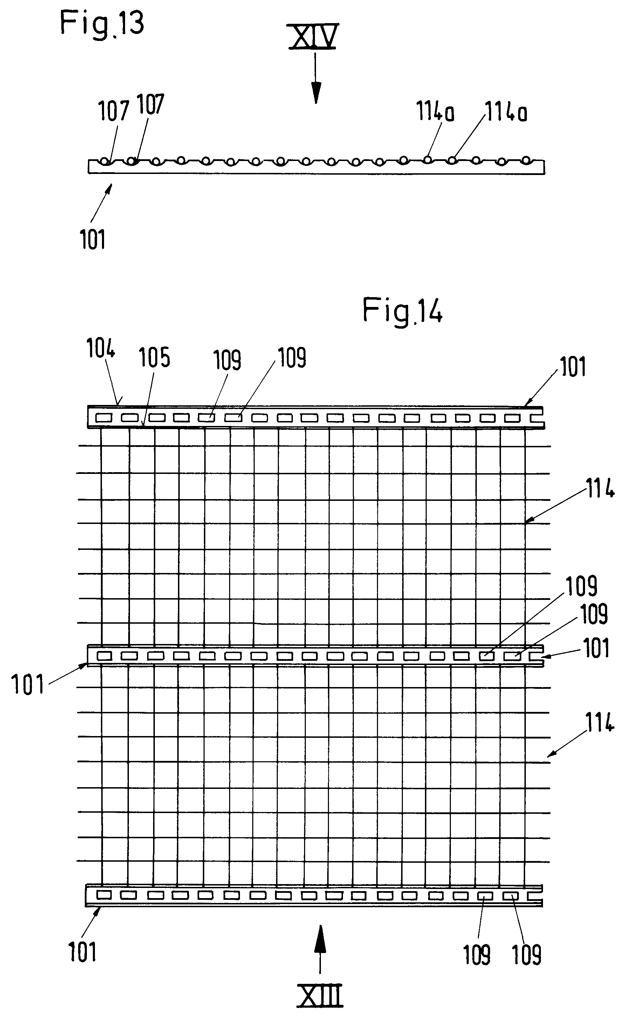

In den Ausführungsbeispielen der Figuren 13 bis 17 ist der Stahlmattenhalter mit der Bezugsziffer 101, die Kammleiste mit der Bezugsziffer 102 und der Kerbbalken mit der Bezugsziffer 103 bezeichnet.

Der Stahlmattenhalter 101 gemäß den Figuren 13 bis 17 besteht im wesentlichen aus einem U-Profil mit den beiden Seitenschenkeln 104, 105 und dem dazwischen befindlichen Steg 106. Die beiden Seitenschenkel 104, 105 sind in der Nähe dieser freien Enden mit kreisabschnittsförmigen Ausnehmungen 107, 108 und der Steg 106 mit rechteckförmigen Ausnehmungen 109 mit abgerundeten Eckenbereichen 110 versehen.

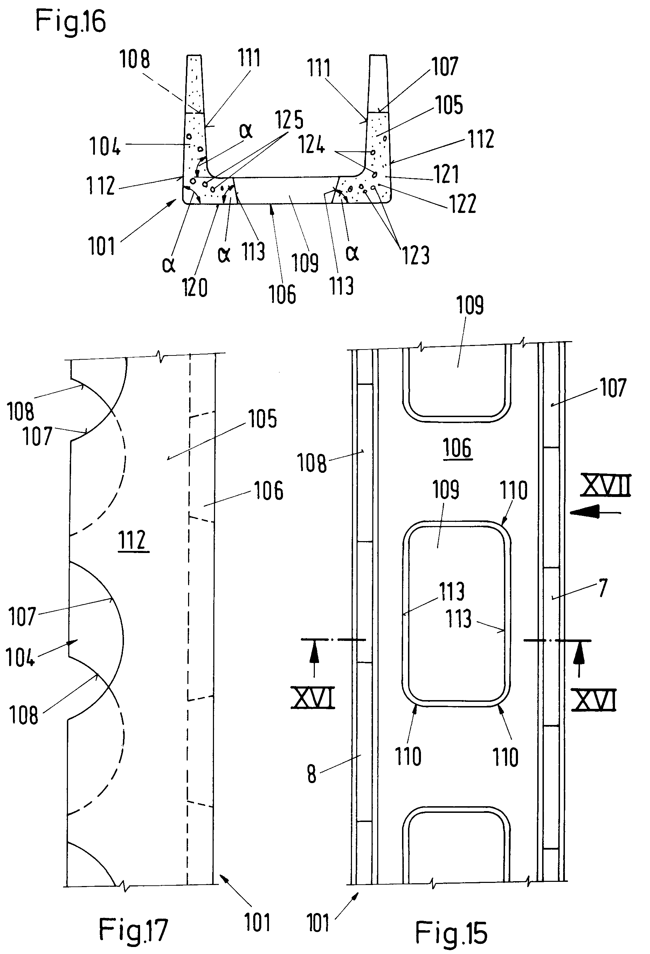

Wie am anschaulichsten aus Fig. 16 entnommen werden kann, ist sowohl die Innenwand 111 als auch die Außenwand 112 der Seitenschenkel 104, 105 und auch die Begrenzungswände 113 der Ausnehmungen 109 mit einer Neigung versehen, die zu einer Horizontalen 120 einen spitzen Winkel α bildet.

In ihrer Einbaulage werden die Stahlmattenhalter 101 gemäß Fig. 14 als Schienen parallel zueinander angeordnet und sodann eine Baustahlmatte 114 so aufgelegt, daß die Enden 114a ihrer Einzelstäbe in den kreisabschnittsförmigen Ausnehmungen 107, 108 aufliegen. Dadurch wird sichergestellt, daß die Baustahlmatte 14 vollkommen in dem zu gießenden Beton eingebettet ist und somit in der jeweiligen Zug- oder Druckzone der auf diese Weise baustahlarmierten Betonplatte ihre entsprechenden Verstärkungswirkungen voll entfalten kann.

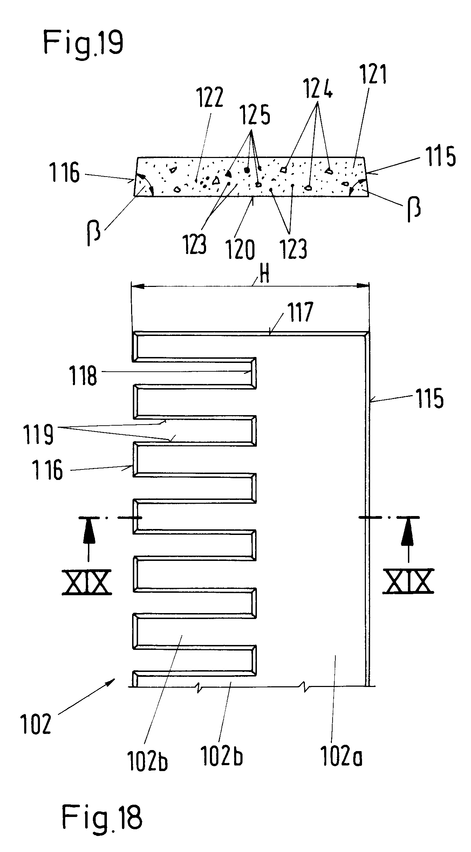

Die Kammleiste 102 gemäß dem Ausführungsbeispiel der Figuren 18 bis 21 ist für einen Transport auf einer Palette 126 bestimmt. Sie besteht etwa zu einer ersten Hälfte 102a ihrer Gesamthöhe H aus einem durchgehend massiven Leistenbereich und etwa zu einer zweiten Hälfte 102b ihrer Gesamthöhe H aus einem zinkenartigen Leistenbereich 102b, wobei sämtliche in der Seitenansicht erkennbare Wandseiten 115-119 eine geneigte Form aufweisen, die gemäß Fig. 19 mit einer Horizontalen 120 einen spitzen Winkel β bildet. Die Neigung dieser Wandseiten 115-119 kann auch abweichend von den Figuren 18 und 19 einen anderen Verlauf nehmen, z.B. dergestalt, daß die Wandseiten 115 und 116 eben ausgebildet sind und davon die Wandseite 116 schmaler ist sowie die dazwischen verlaufenden Wandseiten geneigt sind.

Wie aus den Schnittansichten der Figuren 16, 19 und 23 entnommen werden kann, nimmt von dem Randbereich 121 der Formstücke 101, 102, 103 mit seinem dichten Gefüge zum Kernbereich 122 die Größe der Poren 123 diskontinuierlich zu, wobei Reste 124 von Aluminiumfolie sich als glänzende Partikel über den gesamten Querschnitt der Kammleiste 102 verteilt finden. Die Kunststofffraktionen 125 mit einer höheren Plastifizierungstemperatur als 150 °C bis 180 °C sind gleichfalls im gesamten Querschnitt als eingeschlossene, andersfarbige Partikel 125 als der dominierende Grauton erkennbar. Die Farbe dieser Partikel, z.B. braun, weiß, rot oder dergleichen, läßt wiederum Rückschlüsse auf die Art des Kunststoffes zu. Dabei ist auffällig, daß bei besonders dünnwandigen Produkten wie die der des Stahlmattenhalters 101 und der Kammleiste 102 im Randbereich 121 ein besonders dichtes und äußerst feinporiges Gefüge vorhanden ist, was bei den relativ dickwandigen Produkten der Figuren 3 bis 12 in dieser Art nicht zu finden ist.

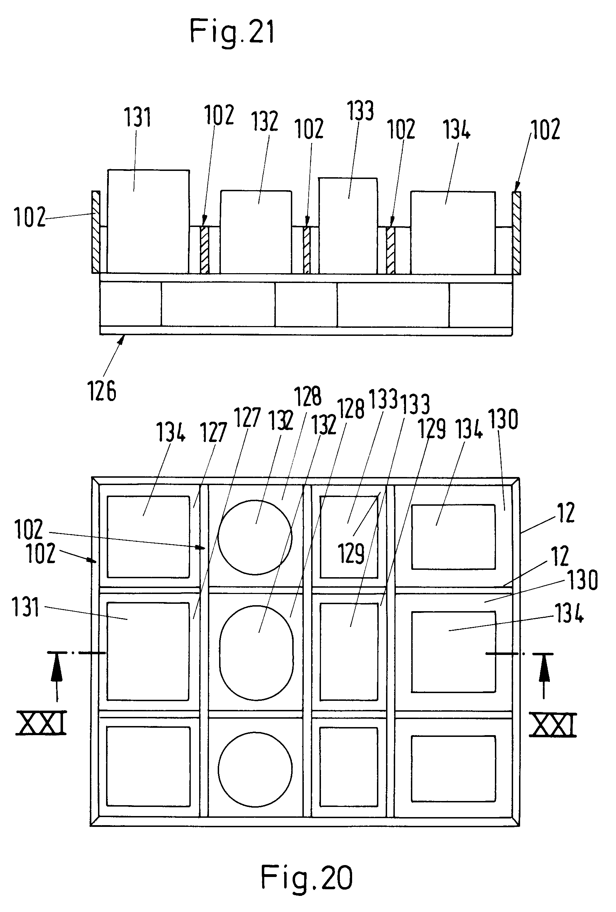

Gemäß den Figuren 20 und 21 sind auf einer Palette mehrere Kammleisten 102 gemäß den Figuren 18 und 10 mit ihren Kammbereichen 102b kastenförmig sowohl in Längsals auch in Querrichtung zusammengesteckt worden, wodurch sich unterschiedliche Fächer 127-130 ergeben, in welche unterschiedlich gestaltete Transportgüter 131-134 eingesetzt werden können, ohne während des Transportes ihre Lage nennenswert zu verändern. Die Kammleisten 102 sind in Fig. 21 der Einfachheit halber in ihrem Schnitt schraffiert worden, entsprechen jedoch in ihrer tatsächlichen Schnittform dem Bild der Fig. 19.

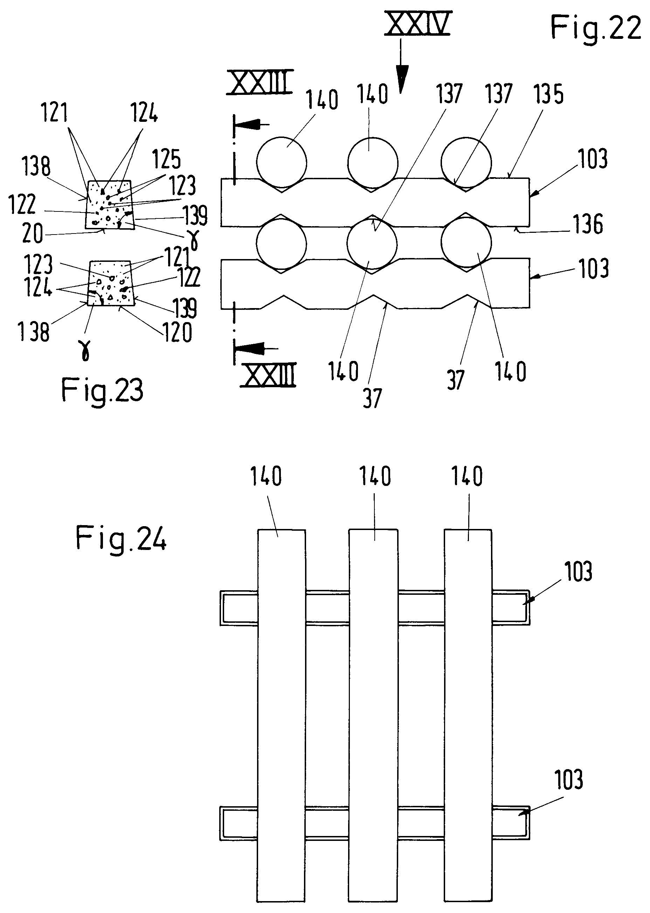

Die Kerbbalken 103 gemäß den Figuren 22 bis 24 sind an ihrer oberen Längsseite 135 und an ihrer unteren Längsseite 136 mit Kerben 137 versehen. Sämtliche in der geschnittenen Seitenansicht der Fig. 23 sichtbaren Wandseiten 138, 139 weisen ebenfalls eine geneigte Form auf, die zu einer Horizontalen 120 unter einem spitzen Winkel γ geneigt ist. Auch darin entspricht das erkennbare Gefüge im wesentlichen dem Gefügebild der Figuren 16 und 19.

Bei ein und demselben Formstück 101, 102, 103 sind vorteilhaft die spitzen Winkel α, β, γ ihrer jeweiligen Wandseiten stets gleich.

Wie aus der Fig. 22 entnommen werden kann, sind in die Kerben 137 des unteren Kerbbalkens 103 rohrförmige Stangenprodukte 140 eingelegt und auf diese Produkte 140 wiederum der nächste Kerbbalken 103 aufgesetzt und in dessen Kerben 137 erneut eine weitere Lage der rohrförmigen Produkte 140 eingelegt. Trotz der Kerben 137 im Hinblick auf das inhomogene Querschnittsgefüge gemäß den Figuren 19 und 23 konnten die an die Formstücke 101, 102, 103 gesetzten Festigkeitserwartungen nicht nur erfüllt, sondern teilweise erheblich übertroffen werden. Letzteres gilt insbesondere für die Kammleiste 102 und den Kerbbalken 103, die nach dem Stand der Technik bislang aus Holz gefertigt worden sind.

### Bezugszeichenliste:

- Vorrichtung: 1
- Schredder: 2
- Trichter: 3, 13
- Magnetabscheider: 4
- Abscheider für NE-Metalle: 5
- Sieb: 6
- Windsichter: 7
- Behälter: 8, 12
- Trockner: 9
- Pelletiereinrichtung: 10
- Lochscheibe: 11
- Förderschnecke: 14
- Eingang der Förderschnecke 14: 14a
- Ende der Förderschnecke 14: 14b
- Erhitzungseinrichtung: 15
- Austrittskammer: 16
- Schieber: 17
- Spritzgußeinrichtung: 18
- Spritzkolben: 19
- Kammer: 20
- Spritzgußform: 21
- Hälften der Spritzgußform 21: 21a, 21b
- Öffnung der Austrittskammer 16: 22
- Formstücke: 23, 30, 33, 34
- Doppelpfeil: 24
- Rutsche: 25
- Pfeile: 26, 28
- Transportband: 27
- Palette: 29
- Isolierplatte: 30
- Sichtseite: 31
- Randfasen: 32, 36
- Trittfläche: 35
- Abstandshalterleiste: 37
- Vertiefung: 38
- Unterseite des Formstückes 34: 39
- Außenrandbereich: 40, 121
- Kernbereich: 41, 122
- Al-Reste: 42, 124
- nichtplastifizierte Partikel: 43, 125
- Poren: 44, 123
- Außenfläche: 45
- Stahlmattenhalter: 101
- Kammleiste: 102
- massiver Leistenbereich: 102a
- zinkenartiger Leistenbereich: 102b
- Kerbbalken: 103
- Seitenschenkel: 104, 105
- Steg: 106
- kreisabschnittsförmige Ausnehmungen: 107, 108
- rechteckförmige Ausnehmungen: 109
- Eckenbereich: 110
- Innen- und Außenwand der Seitenschenkel 104, 105: 111, 112
- Begrenzungswände der Ausnehmungen 109: 113
- Baustahlmatte: 114
- Enden der Baustahlmatte 114: 114a
- Wandseiten der Kammleiste 102: 115-119
- Horizontale: 120
- Palette: 126
- Fächer: 127-130
- Transportgüter: 131-134
- Längsseiten der Kerbbalken 103: 135, 136
- Kerben: 137
- Wandseiten des Kerbbalkens 103: 138, 139
- Stangenprodukte: 140
- spitze Winkel: α, β, γ
- Gesamthöhe der Kammleiste 102: H

## Patentansprüche

1. Formstück aus verschiedenen Fraktionen thermoplastischer Kunststoffe aus einer Mischung von sortierten Kunststoffabfällen der Abfallindustrie des "Dualen Systems", welches in seinen Randbereichen ein dichteres Gefüge als in seinem Kernbereich aufweist, wobei die Mischung erhitzt, in eine Spritzgußform gepreßt und gekühlt ist, **dadurch gekennzeichnet,** daß das Formstück (23, 30, 33, 34, 101, 102, 103) bis auf Reste (42, 124) von Aluminiumfolie vollständig aus von Metallen, Glas, steinernen Materialien, Leichtfremdstoffen, wie Holz, Aluminiumfolie und Drähten, befreiten Kunststoffkomponenten des "Dualen Systems" besteht, in welchem nichtplastifizierte Bestandteile (43, 125) von der plastifizierten Mischung nicht nur in einem feinporigen Querschnittsaußenbereich, sondern mit Restfeuchtbestandteilen auch in einem grobporigen Kernbereich (41, 122) des Querschnittes eingeschlossen sind.

2. Formstück nach Anspruch 1, **dadurch gekennzeichnet,** daß es in nichteingefärbtem Zustand eine graumarmorierte Oberfläche (45) aufweist und im Schnittbild die Reste (42, 124) von Aluminiumfolie sowie die nichtplastifizierten Bestandteile (43, 125) durch ihre farblichen Unterschiede zum unifarbenem grauen Untergrund identifizierbar sind.

3. Formstück nach Anspruch 1 oder 2, **dadurch gekennzeichnet,** daß es als Blend- oder Isolierplatte (30) oder als Balken, Sparren oder Stange für Bauzwecke ausgebildet ist.

4. Formstück nach Anspruch 1 oder 2, **dadurch gekennzeichnet,** daß es in die Form eines Futtertroges (33), wie die eines Hundenapfes, gepreßt ist.

5. Formstück nach Anspruch 1 oder 2, **dadurch gekennzeichnet,** daß es als Skulptur oder Geschenkartikel ausgebildet ist.

6. Formstück nach Anspruch 1 oder 2, **dadurch gekennzeichnet,** daß es zu einem dünnwandigen, mit Ausnehmungen (107-109) und/oder Einschnitten und/oder Kerben (137) versehenen Gebrauchsgegenstand in Form eines Stahlmattenhalters (101), einer Kammleiste (102) oder eines Kerbbalkens (103) ausgebildet ist, deren Wandseiten (111-113; 115-119; 138, 139) mit einer zu einer Horizontalen (20) schräg verlaufenden Form versehen sind.

7. Formstück nach Anspruch 6, **dadurch gekennzeichnet,** daß es als Stahlmattenhalter (101) aus einer im Querschnitt U-förmigen Schiene besteht, in deren Seitenschenkel (104, 105) kreisabschnittsförmige Ausnehmungen (107, 108) und in deren Steg (106) rechteckförmige Ausnehmungen (109) mit abgerundeten Eckenbereichen (110) vorgesehen sind.

8. Formstück nach Anspruch 7, **dadurch gekennzeichnet,** daß die Innen- und Außenwand (111, 112) der Seitenschenkel (104, 105) sowie die Begrenzungswände (113) der Ausnehmungen (109) eine Neigung aufweisen, die zur Horizontalen (120) einen spitzen Winkel (α) bildet.

9. Formstück nach Anspruch 7, **dadurch gekennzeichnet,** daß es als Kammleiste (102) für einen Transport auf einer Palette (126) mit einem bis etwa zu einer ersten Hälfte ihrer Höhe (H) durchgehenden, massiven Leistenbereich (102a) und zu etwa einer zweiten Hälfte seiner Höhe (H) mit einem zinkenartigen Leistenbereich (102b) versehen ist, wobei sämtliche in der Seitenansicht erkennbaren Wandseiten (115-119) eine geneigte Form aufweisen, die mit der Horizontalen (120) einen spitzen Winkel (β) bilden.

10. Formstück nach Anspruch 6, **dadurch gekennzeichnet,** daß es als Kerbbalken (103) mit in regelmäßigen Abständen an seiner oberen und unteren Längsseite (135, 136) angeordneten Kerben (137) versehen ist und sämtliche in der Seitenansicht sichtbaren Wandseiten (138, 139) eine geneigte Form aufweisen, die mit der Horizontalen (120) einen spitzen Winkel (γ) bildet.

11. Formstück nach einem oder mehreren der Ansprüche 6 bis 10, **dadurch gekennzeichnet,** daß die spitzen Winkel (α, β, γ) der Wandseiten (111-113; 115-119; 138, 139) bei ein und demselben Formstück (101, 102, 103) gleich sind.

12. Formstück nach Anspruch 1 oder 2, **dadurch gekennzeichnet,** daß es (23) in an sich bekannter Weise als Verbundstein (34) in eine quadratische, rechteckige oder sechseckige Form gepreßt und an seinen sichtbaren, die Trittfläche (35) umschließenden Außenkanten mit einer unter 45° verlaufenden und ca. 6 mm bis 10 mm breiten, umlaufenden Randfase (36) versehen ist.

13. Formstück nach einem der Ansprüche 1 bis 12, **dadurch gekennzeichnet,** daß es durch einen Überschuß an Polypropylenbestandteilen mit einer glatten Oberfläche (31, 35) versehen ist.

14. Verfahren zur Herstellung von Formstücken nach einem oder mehreren der Ansprüche 1 bis 13 aus verschiedenen Fraktionen thermoplastischer Kunststoffe aus einer Mischung von sortierten Kunststoff-Abfällen der Abfallindustrie des "Dualen Systems", die zerkleinert, gemischt, in eine Spritzgußform gepreßt und gekühlt werden, **gekennzeichnet durch** folgende Verfahrensschritte:
a) Eine Mischfraktion des "Dualen Systems" wird auf eine Korngröße von 50 mm bis 60 mm zerkleinert,
b) das zerkleinerte Material wird von den Metallbestandteilen befreit,
c) hiernach werden steinerne Materialien und Glas durch Sieben aus der Mischfraktion entfernt,
d) in einem Windsichter (7) wird die Mischfraktion von Leichtfremdstoffen, wie Holz, Aluminiumfolie und dünnen Drähten, weitgehend befreit,
e) in einem Trockner (9) wird das Restmaterial auf eine Feuchtigkeit von weniger als 5 %, bezogen auf die Trockensubstanz, getrocknet,
f) sodann wird die Mischfraktion auf eine Temperatur von etwa 120 °C erhitzt und in eine gut schüttfähige Kornform überführt,
g) die Kornform wird sodann auf 150 °C bis 180 °C erhitzt und nach Beendigung des Spritzgußvorganges die Spritzgußform (21) mit dem darin befindlichen Formstück (23) mit Wasser gekühlt.

15. Verfahren nach Anspruch 14, **dadurch gekennzeichnet,** daß die Mischfraktion auf ihre Korngröße geschreddert wird.

16. Verfahren nach Anspruch 14 oder 15, **dadurch gekennzeichnet,** daß die Mischfraktion nach ihrer Erhitzung auf 120 °C entweder in Pellets oder in Briketts gepreßt oder in stangenförmige Formkörper überführt und hiernach auf eine bestimmte Korngröße gebrochen, geschnitten oder geformt wird.

17. Verfahren nach einem der Ansprüche 14 bis 16, **dadurch gekennzeichnet,** daß die Pellets mit einem Durchmesser von 4 mm bis 10 mm und einer Länge von 20 mm bis 50 mm versehen werden.

18. Verfahren nach einem der Ansprüche 14 bis 17, **dadurch gekennzeichnet,** daß die Formstücke (23, 30, 33, 34, 101-103) nach dem Spritzgußvorgang mindestens fünf Minuten in der Spritzgußform (21) belassen, während dieser Zeit mit Wasser gekühlt und nach ihrem Ausstoß aus der Spritzgußform (21) weiter an der Luft gekühlt werden.

19. Vorrichtung zur Durchführung des Verfahrens nach den Ansprüchen 14 bis 18 mit einer Trockeneinrichtung, einer Spritzgußmaschine mit Erhitzungseinrichtung und einer dieser zugeordneten Spritzgußform, **dadurch gekennzeichnet,** daß dem Trockner (9) in Durchlaufrichtung der Mischfraktion des "Dualen Systems" nacheinander ein Schredder (2), ein Magnetabscheider (4) zur Befreiung der Eisenbestandteile, ein weiterer Abscheider (5) zum Trennen von Nichteisenmetallen, eine Siebeinrichtung (6) zum Entfernen der steinernen und gläsernen Materialien sowie ein Windsichter (7) zur Entfernung der Leichtfremdstoffe vorgeordnet sind.

20. Vorrichtung nach Anspruch 19, **dadurch gekennzeichnet,** daß vor der Spritzgußform (21) eine Förderschnecke (14) mit sie umgebender Erhitzungseinrichtung (15) angeordnet ist, an deren Eintritt (14a) ein Trichter (13) zur Aufnahme des schüttfähigen Materials der Mischfraktion angebracht ist.

21. Vorrichtung nach Anspruch 19 oder 20, **dadurch gekennzeichnet,** daß zwischen dem Trichter (13) und der Förderschnecke (14) ein Saugförderer angeordnet ist.

22. Vorrichtung nach einem der Ansprüche 19 bis 21, **dadurch gekennzeichnet,** daß ein Spritzkolben (19) beim Zurückfahren von dem Austrittsende (14b) der Förderschnecke (14) das bis auf ca. 150 °C bis 180 °C erhitzte, plastifizierte Material der Mischfraktion ansaugt und nach dem Verschließen des Austrittsendes (14b) der Förderschnecke (14) in die Spritzgußform (21) preßt.

23. Vorrichtung nach einem der Ansprüche 19 bis 22, **dadurch gekennzeichnet,** daß die Spritzgußvorrichtung in an sich bekannter Weise aus mehreren nach Art eines Karussells angeordneten Spritzguß-Rundläuferstationen (18) besteht, deren Anzahl und deren Zeittakt derart ausgerichtet sind, daß vor der erneuten Füllung einer Spritzgußform (21) für das bis zu diesem Zeitpunkt darin eingeschlossene Formstück (23, 30, 33, 34) eine Kühlzeit mit Wasser von mindestens fünf Minuten sichergestellt ist.

24. Vorrichtung nach einem der Ansprüche 19 bis 23, **dadurch gekennzeichnet,** daß unterhalb des Ausganges der Spritzgußform (21) eine Rutsche (25), am Ende der Rutsche (25) ein Transportband (27) und am Ende des Transportbandes (27) eine Palette (29) oder ein Behälter zur Aufnahme und Luftkühlung der Formstücke (23, 30, 33, 34) angeordnet sind.

25. Vorrichtung nach einem der Ansprüche 19 bis 24, **dadurch gekennzeichnet,** daß zwischen ihren einzelnen Einrichtungen (2, 4, 5, 6, 7, 9, 10, 13) jeweils Transportvorrichtungen in Form von Gurtband- oder Kettenförderern vorgesehen sind.
